# EUROPÄISCHE PATENTSCHRIFT

(11) **EP 3 003 800 B1**
(45) Veröffentlichungstag und Bekanntmachung des Hinweises auf die Patenterteilung: **30.08.2017**
(21) Anmeldenummer: 13730819.3
(22) Anmeldetag: 05.06.2013
(51) Int. Cl.: B60S 3/00, B60S 3/06

(54) **FAHRZEUGWASCHANLAGE**
VEHICLE WASHING SYSTEM
SYSTÈME DE LAVAGE DE VÉHICULES

(43) Veröffentlichungstag der Anmeldung: 13.04.2016
(73) Patentinhaber: Alfred Kärcher GmbH & Co. KG, 71364 Winnenden (DE)
(72) Erfinder: SPECKMAIER, André, 71543 Wüstenrot (DE); ECKSTEIN, Lars, 74321 Bietigheim-Bissingen (DE)
(74) Vertreter: Hoeger, Stellrecht & Partner Patentanwälte mbB
(86) Internationale Anmeldenummer: PCT/EP2013/061581
(87) Internationale Veröffentlichungsnummer: WO 2014/194943

(56) Entgegenhaltungen:
- WO-A1-2011/134523
- DE-A1-102006 043 221
- DE-U1- 20 213 580
- JP-A- 2009 073 300

## Beschreibung

Die Erfindung betrifft eine Fahrzeugwaschanlage mit einer ersten und einer zweiten Stütze, an denen eine um eine horizontale Drehachse drehbare Dachwaschbürste und ein Dachtrocknungsaggregat jeweils zwischen einer oberen und einer unteren Endstellung hin und her bewegbar gehalten sind, und mit einem Spritzschutzelement, das in Höhe der oberen Endstellungen der Dachwaschbürste und des Dachtrocknungsaggregates zwischen der Dachwaschbürste und dem Dachtrocknungsaggregat angeordnet ist.

Eine solche Fahrzeugwaschanlage ist in Dokument DE 10 2006 043221 A1 offenbart.

Mittels der Dachwaschbürste können die Motorhaube, die Windschutzscheibe und das Dach eines Kraftfahrzeugs und auch der Bereich des Kofferraums gereinigt werden. Die Dachwaschbürste kann entsprechend dem Konturverlauf des Fahrzeugs in ihrer Höhe verstellt werden. Mittels Spritzdüsen kann auf das Fahrzeug Reinigungsflüssigkeit, vorzugsweise Wasser, aufgebracht werden. Um das Fahrzeug zum Abschluss eines Reinigungsvorgangs trocknen zu können, weist die Fahrzeugwaschanlage ein Dachtrocknungsaggregat auf, das an den beiden Stützen ebenfalls höhenverstellbar gelagert ist und entsprechend dem Konturverlauf des Fahrzeugs in seiner Höhe verstellt werden kann. Das Dachtrocknungsaggregat kann ebenso wie die Dachwaschbürste zwischen einer oberen Endstellung und einer unteren Endstellung hin und her bewegt werden.

Es hat sich als vorteilhaft erwiesen, zwischen der Dachwaschbürste und dem Dachtrocknungsaggregat eine Spritzschutzeinrichtung anzuordnen, die in Höhe der oberen Endstellungen der Dachwaschbürste und des Dachtrocknungsaggregates positioniert ist. Die Spritzschutzeinrichtung ist als Flächenelement ausgestaltet und kann beispielsweise aus Blech- oder Kunststoffmaterial hergestellt sein. Sie umfasst zwei Seitenränder, die jeweils einer Stütze zugewandt sind, sowie einen oberen und einen unteren Rand, die sich zwischen den Seitenrändern erstrecken.

Zum Waschen eines Fahrzeugs kann dieses relativ zu den Stützen verfahren werden. Es kann auch vorgesehen sein, dass die Fahrzeugwaschanlage als Portalwaschanlage ausgestaltet ist, bei der die beiden Stützen an ihrem oberen Ende über eine Traverse miteinander verbunden sind und gemeinsam mit der Traverse entlang eines Fahrzeugs bewegt werden können.

Aufgabe der vorliegenden Erfindung ist es, eine Fahrzeugwaschanlage der eingangs genannten Art derart weiterzubilden, dass sie eine kompakte Ausgestaltung aufweist und ein sehr gutes Reinigungsergebnis erzielt.

Diese Aufgabe wird bei einer Fahrzeugwaschanlage der gattungsgemäßen Art erfindungsgemäß dadurch gelöst, dass das Spritzschutzelement mindestens eine Aussparung aufweist, die sich im Bereich zwischen einem Seitenrand und dem unteren Rand des Spritzschutzelements erstreckt und in die ein Teil des Dachtrocknungsaggregats eintaucht, wenn das Dachtrocknungsaggregat seine obere Endstellung einnimmt, wobei am unteren Rand des Spritzschutzelements eine sich über die gesamte Breite des Spritzschutzelements erstreckende Ablaufrinne angeordnet ist, die mindestens einen bewegbaren Endabschnitt aufweist, der zwischen einer ersten und einer zweiten Stellung hin und her bewegbar ist, wobei er sich in seiner ersten Stellung über die gesamte Breite einer Aussparung erstreckt und die Aussparung untergreift und in der zweiten Stellung die Aussparung freigibt.

Bei der erfindungsgemäßen Fahrzeugwaschanlage weist das Spritzschutzelement im Bereich zwischen seinem unteren Rand und mindestens einem Seitenrand eine Aussparung auf. Dies gibt die Möglichkeit, das Dachtrocknungsaggregat in geringem Abstand zum Spritzschutzelement anzuordnen, wobei in der oberen Endstellung des Dachtrocknungsaggregates ein Teil des Dachtrocknungsaggregates in die Aussparung des Spritzschutzelements eintaucht. Die Aussparung gibt somit Raum frei für einen Teil des Dachtrocknungsaggregates, wenn das Dachtrocknungsaggregat seine obere Endstellung einnimmt. Beim Trocknen des Fahrzeugs wird das Dachtrocknungsaggregat entsprechend dem Konturverlauf des Fahrzeugs relativ zum Fahrzeug bewegt. Das Dachtrocknungsaggregat erzeugt einen Luftstrom, der die Reinigungsflüssigkeit vom Fahrzeug entfernt. Während der Bewegung des Dachtrocknungsaggregates und damit während des Trocknungsvorgangs des Fahrzeugs soll vom Spritzschutzelement möglichst keine Reinigungsflüssigkeit auf das Fahrzeug tropfen, denn dies würde das Reinigungsergebnis beeinträchtigen. Hierzu ist am unteren Rand des Spritzschutzelements eine sich über die gesamte Breite des Spritzschutzelements erstreckende Ablaufrinne angeordnet. Die Ablaufrinne bildet eine Tropfenauffangvorrichtung aus. Um auch im Bereich der mindestens einen Aussparung Flüssigkeitstropfen auffangen zu können, erstreckt sich die Ablaufrinne über den Bereich der Aussparung, wobei sie in diesem Bereich einen bewegbaren Endabschnitt ausbildet, der zwischen einer ersten Stellung und einer zweiten Stellung hin und her bewegbar ist. In seiner ersten Stellung untergreift der bewegbare Endabschnitt die Aussparung, so dass Flüssigkeitströpfchen, die im Bereich der Aussparung von dem Spritzschutzelement herabtropfen, vom bewegbaren Endabschnitt der Ablaufrinne aufgefangen und abgeleitet werden. Nach erfolgtem Trocknungsvorgang kann das Dachtrocknungsaggregat in seine obere Endstellung verfahren werden. Dabei kann ein Teil des Dachtrocknungsaggregates platzsparend in einer Aussparung des Spritzschutzelements positioniert werden, wobei der bewegbare Endabschnitt der Ablaufrinne in eine zweite Stellung bewegt wird, in der er die Aussparung freigibt.

Die erfindungsgemäße Fahrzeugwaschanlage zeichnet sich somit durch eine sehr kompakte Ausgestaltung auf, wobei das Dachtrocknungsaggregat in geringem Abstand zum Spritzschutzelement positioniert werden kann, und außerdem zeichnet sich die erfindungsgemäße Fahrzeugwaschanlage durch ein sehr gutes Reinigungsergebnis aus, wobei insbesondere vermieden wird, dass während der Bewegung des Dachtrocknungsaggregates Flüssigkeitströpfchen vom Spritzschutzelement auf das Fahrzeug herabtropfen können. Trotz der Bereitstellung von mindestens einer Aussparung, in die in der oberen Endstellung des Dachtrocknungsaggregates ein Teil des Dachtrocknungsaggregates eintauchen kann, besteht keine Gefahr, dass beim Absenken des Dachtrocknungsaggregates Flüssigkeitströpfchen vom Bereich der Aussparung zum Fahrzeug gelangen können.

Das Dachtrocknungsaggregat weist günstigerweise ein Gehäuse auf und mindestens ein Gebläse, das einen Gebläsemotor und eine vom Gebläsemotor angetriebene Turbine aufweist. Mittels der Turbine kann ein Luftstrom erzeugt werden, der auf das Fahrzeug gerichtet werden kann.

Der in der oberen Endstellung des Dachtrocknungsaggregates in eine Aussparung des Spritzschutzelements eintauchende Teil des Dachtrockneraggregates kann beispielsweise ein Gebläse oder ein Abschnitt eines Gebläses, insbesondere einen Gebläsemotor oder eine Turbine ausbilden.

Bevorzugt weist das Spritzschutzelement zwei Aussparungen auf, die sich jeweils im Bereich zwischen einem Seitenrand und dem unteren Rand des Spritzschutzelements erstrecken und in die jeweils ein Teil des Dachtrocknungsaggregates eintaucht, wenn das Dachtrocknungsaggregat seine obere Endstellung einnimmt, und die Ablaufrinne weist zwei bewegbare Endabschnitte auf, die jeweils zwischen einer ersten und einer zweiten Stellung hin und her bewegbar sind, wobei sie sich in ihrer ersten Stellung jeweils über die gesamte Breite einer Aussparung erstrecken und die Aussparung untergreifen und in der zweiten Stellung die jeweilige Aussparung freigeben. Eine derartige Ausgestaltung hat den Vorteil, dass das Dachtrocknungsaggregat zwei Teile aufweisen kann, die platzsparend jeweils von einer Aussparung des Spritzschutzelements aufgenommen werden können, wenn das Dachtrocknungsaggregat seine obere Endstellung einnimmt. Das Spritzschutzelement kann somit im Bereich zwischen einem ersten Seitenrand und dem unteren Rand eine erste Aussparung aufweisen und im Bereich zwischen einem zweiten Seitenrand und dem unteren Rand kann das Spritzschutzelement eine zweite Aussparung aufweisen. Die Ablaufrinne des Spritzschutzelements umfasst bei einer derartigen Ausgestaltung einen ersten bewegbaren Endabschnitt, der in seiner ersten Stellung die erste Aussparung untergreift, und einen zweiten bewegbaren Endabschnitt, der in seiner ersten Stellung die zweite Aussparung untergreift. In ihrer zweiten Stellung geben die bewegbaren Endabschnitte die beiden Aussparungen frei, so dass zwei Teile des Dachtrocknungsaggregates in den Aussparungen positioniert werden können.

Um eine sehr wirkungsvolle Trocknung des Fahrzeugs zu erreichen, ist es günstig, wenn das Dachtrocknungsaggregat zwei Gebläse aufweist, die jeweils einer Stütze benachbart angeordnet sind. Hierbei kann jeweils ein Gebläse oder ein Abschnitt eines Gebläses ein Teil des Dachtrocknungsaggregates ausbilden, der in der oberen Endstellung des Dachtrocknungsaggregates in eine Aussparung des Spritzschutzelements eintaucht.

Insbesondere kann vorgesehen sein, dass das Spritzschutzelement zwei Aussparungen aufweist, in die in der oberen Endstellung des Dachtrocknungsaggregates jeweils ein Gebläsemotor eintaucht.

Von Vorteil ist es, wenn die Ablaufrinne einen ortsfest am unteren Rand des Spritzschutzelements gehaltenen Hauptabschnitt aufweist, an dem der mindestens eine bewegbare Endabschnitt schwenkbar gelagert ist. Der Hauptabschnitt kann sich mit Ausnahme der mindestens einen Aussparung über die gesamte Breite des Spritzschutzelements erstrecken, und am Hauptabschnitt kann der mindestens eine bewegbare Endabschnitt der Ablaufrinne schwenkbar gelagert sein. Die Schwenkachse kann horizontal und senkrecht zum unteren Rand des Spritzschutzelements ausgerichtet sein.

Insbesondere kann vorgesehen sein, dass der Hauptabschnitt der Ablaufrinne ein erstes Ende und ein zweites Ende aufweist, wobei am ersten Ende ein erster bewegbarer Endabschnitt und am zweiten Ende ein zweiter bewegbarer Endabschnitt um parallel zueinander ausgerichtete Schwenkachsen schwenkbar gelagert sind.

Alternativ zu einer Lagerung der bewegbaren Endabschnitte am Hauptabschnitt der Ablaufrinne kann auch vorgesehen sein, dass zumindest ein bewegbarer Endabschnitt an einer Stütze der Fahrzeugwaschanlage schwenkbar gelagert ist.

Günstig ist es, wenn der mindestens eine bewegbare Endabschnitt in seiner ersten Stellung schräg zur Horizontalen geneigt ist, wobei er mit seinem einer Stütze zugewandten Ende eine tiefere Position einnimmt als mit seinem der Stütze abgewandten Ende. Eine derartige Ausrichtung des mindestens einen bewegbaren Endabschnitts in dessen erster Stellung stellt auf konstruktiv einfache Weise sicher, dass Flüssigkeit, die vom Endabschnitt aufgefangen wird, unter der Wirkung der Schwerkraft in Richtung einer Stütze abfließen kann. Die Flüssigkeit wird somit seitlich nach außen abgeleitet, so dass keine Gefahr besteht, dass das Fahrzeug beim Trocknungsvorgang durch Flüssigkeitströpfchen beeinträchtigt wird, die sich im Bereich einer Aussparung vom Spritzschutzelement ablösen.

Die Neigung des mindestens einen bewegbaren Endabschnitts zur Horizontalen kann in seiner ersten Stellung vorzugsweise etwa 3° bis etwa 10°, insbesondere etwa 5° betragen.

Die erfindungsgemäße Fahrzeugwaschanlage weist bei einer bevorzugten Ausgestaltung zusätzlich zum Dachtrocknungsaggregat mindestens ein an einer Stütze angeordnetes Seitentrocknungsaggregat auf mit einer oder mehreren Seitentrocknungsdüsen, mit denen ein Luftstrom auf eine Seite des Fahrzeugs gerichtet werden kann. Hierbei ist es von Vorteil, wenn der mindestens eine bewegbare Endabschnitt in seiner ersten Stellung in Richtung auf eine Stütze über die mindestens eine Seitentrocknungsdüse, vorzugsweise über das gesamte Seitentrocknungsaggregat hervorsteht, denn dadurch ist sichergestellt, dass Flüssigkeit, die vom bewegbaren Endabschnitt in Richtung Stütze abgeleitet wird, nicht von dem vom Seitentrocknungsaggregat erzeugten Luftstrom erfasst und vom Luftstrom auf eine Fahrzeugseite gerichtet werden kann.

Bei einer vorteilhaften Ausführungsform der erfindungsgemäßen Fahrzeugwaschanlage ist der mindestens eine bewegbare Endabschnitt der Ablaufrinne in Abhängigkeit von der Bewegung des Dachtrocknungsaggregates zwischen seiner ersten Stellung und seiner zweiten Stellung hin und her bewegbar. Dies stellt sicher, dass der mindestens eine bewegbare Endabschnitt seine erste Stellung einnimmt, wenn das Dachtrocknungsaggregat ausgehend von seiner oberen Endstellung in Richtung auf seine untere Endstellung abgesenkt wird. Flüssigkeitströpfchen, die sich beim Absenken des Dachtrocknungsaggregates im Bereich einer Aussparung vom Spritzschutzelement ablösen, werden zuverlässig von einem bewegbaren Endabschnitt der Ablaufrinne aufgefangen, der die Aussparung untergreift, sobald das Dachtrocknungsaggregat die Aussparung freigibt.

Um den mindestens einen bewegbaren Endabschnitt zwischen seiner ersten Stellung und seiner zweiten Stellung hin und her bewegen zu können, kann die Fahrzeugwaschanlage eine Antriebseinrichtung aufweisen, beispielsweise ein Kolben-Zylinderaggregat oder einen Elektromotor.

Bei einer konstruktiv besonders einfachen Ausgestaltung ist der mindestens eine bewegbare Endabschnitt der Ablaufrinne vom Dachtrocknungsaggregat aus seiner ersten Stellung in seine zweite Stellung bewegbar. Wird das Dachtrocknungsaggregat in seine obere Endstellung bewegt, so überführt es hierbei den mindestens einen bewegbaren Endabschnitt aus seiner ersten Stellung, in der er eine Aussparung des Spritzschutzelements untergreift, in seine zweite Stellung, in der er die Aussparung freigibt, so dass ein Teil des Dachtrocknungsaggregates in die Aussparung eintauchen kann.

Von besonderem Vorteil ist es, wenn der mindestens eine bewegbare Endabschnitt vom Dachtrocknungsaggregat in seine zweite Stellung anhebbar ist. Das Dachtrocknungsaggregat kann beim Übergang in seine obere Endstellung den mindestens einen Endabschnitt so weit anheben, dass dieser eine Aussparung des Spritzschutzelements freigibt und ein Teil des Dachtrocknungsaggregates in die Aussparung eintauchen kann.

Es kann beispielsweise vorgesehen sein, dass am Dachtrocknungsaggregat, vorzugsweise an einem Gebläsemotor oder einer Turbine, ein Mitnehmer angeordnet ist, der beim Verfahren des Dachtrocknungsaggregates in die obere Endstellung an einem bewegbaren Endabschnitt zur Anlage gelangt und diesen beim weiteren Anheben des Dachtrocknungsaggregates in seine zweite Stellung überführt. Wird das Dachtrocknungsaggregat später wieder abgesenkt, so kann der Mitnehmer den mindestens einen bewegbaren Endabschnitt wieder freigeben.

Von Vorteil ist es, wenn der mindestens eine bewegbare Endabschnitt beim Absenken des Dachtrocknungsaggregates selbsttätig in seine erste Stellung bewegbar ist. Der Übergang von der zweiten Stellung in die erste Stellung kann unter der Wirkung der Gewichtskraft des bewegbaren Endabschnitts erfolgen, ohne dass zusätzliche Antriebselemente erforderlich sind.

Die nachfolgende Beschreibung einer vorteilhaften Ausführungsform der Erfindung dient im Zusammenhang mit der Zeichnung der näheren Erläuterung. Es zeigen:

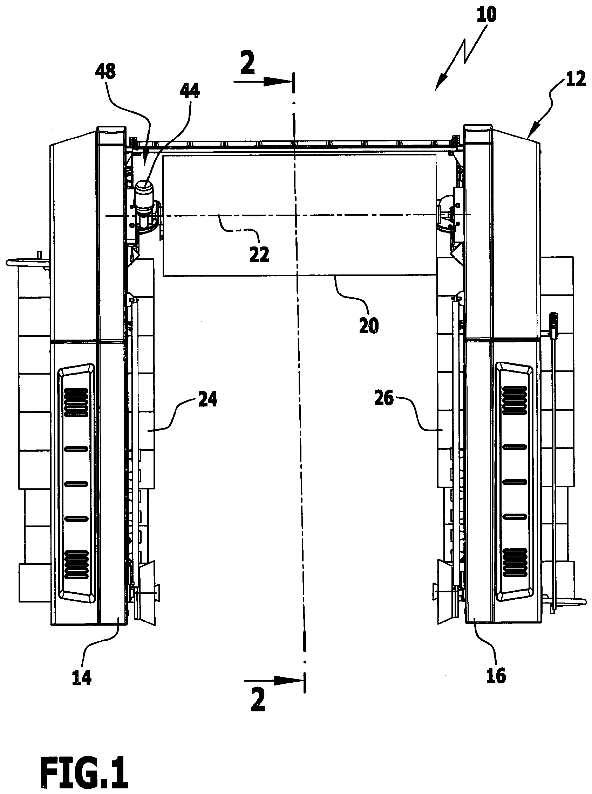

- Figur 1:: eine schematische Vorderansicht einer Fahrzeugwaschanlage mit einer Dachwaschbürste und zwei Seitenwaschbürsten;
- Figur 2:: eine Schnittansicht der Fahrzeugwaschanlage längs der Linie 2-2 in Figur 1;

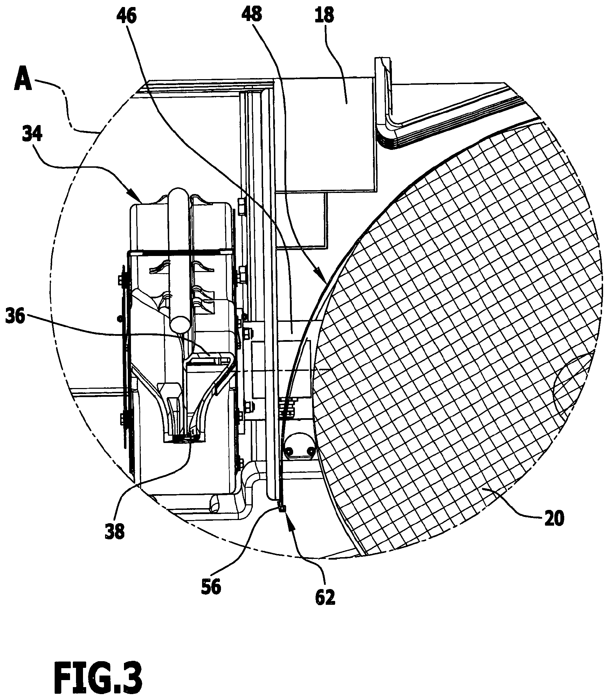

- Figur 3:: eine vergrößerte Darstellung von Detail A aus Figur 2;
- Figur 4:: eine schematische Vorderansicht der Fahrzeugwaschanlage aus Figur 1, wobei die Dachwaschbürste und die Seitenwaschbürsten entfernt wurden und ein Dachtrocknungsaggregat eine untere Endstellung einnimmt;
- Figur 5:: eine vergrößerte Darstellung von Detail B aus Figur 4, wobei sich das Dachtrocknungsaggregat einer oberen Endstellung annähert, und
- Figur 6:: eine vergrößerte Darstellung von Detail B aus Figur 4, wobei das Dachtrocknungsaggregat seine obere Endstellung einnimmt.

In der Zeichnung ist schematisch eine vorteilhafte Ausführungsform einer erfindungsgemäßen Fahrzeugwaschanlage dargestellt, die insgesamt mit dem Bezugszeichen 10 belegt ist. Die Fahrzeugwaschanlage 10 umfasst ein Waschportal 12, das eine erste vertikale Stütze 14 und eine zweite vertikale Stütze 16 aufweist, die über eine Traverse 18 starr miteinander verbunden sind. An den beiden Stützen 14, 16 ist eine Dachwaschbürste 20 höhenverstellbar gehalten. Die Dachwaschbürste 20 kann in üblicher Weise von einem an sich bekannten und deshalb zur Erzielung einer besseren Übersicht in der Zeichnung nicht dargestellten Bürstenmotor um eine horizontal ausgerichtete Drehachse 22 in Drehung versetzt werden.

Das Waschportal 12 kann entlang eines zu reinigenden Fahrzeugs bewegt werden, wobei die Dachwaschbürste 20 entsprechend dem Verlauf der Kontur des Fahrzeugs in ihrer Höhe verstellt werden kann, um die Motorhaube, die Windschutzscheibe, das Dach und gegebenenfalls den Kofferraumdeckel des Fahrzeugs zu reinigen.

Zusätzlich zur Dachwaschbürste 20 weist die Fahrzeugwaschanlage 10 eine erste Seitenwaschbürste 24 und eine zweite Seitenwaschbürste 26 auf, die mittels an sich bekannter und deshalb in der Zeichnung ebenfalls nicht dargestellter Bürstenmotoren jeweils um eine vertikale Drehachse 30 in Drehung versetzt werden können. Die Seitenwaschbürsten 24, 26 können in an sich bekannter Weise längs der Traverse 18 hin und her bewegt werden zur Reinigung der Seitenflächen des Fahrzeugs, während das Waschportal 12 entlang des Fahrzeugs bewegt wird.

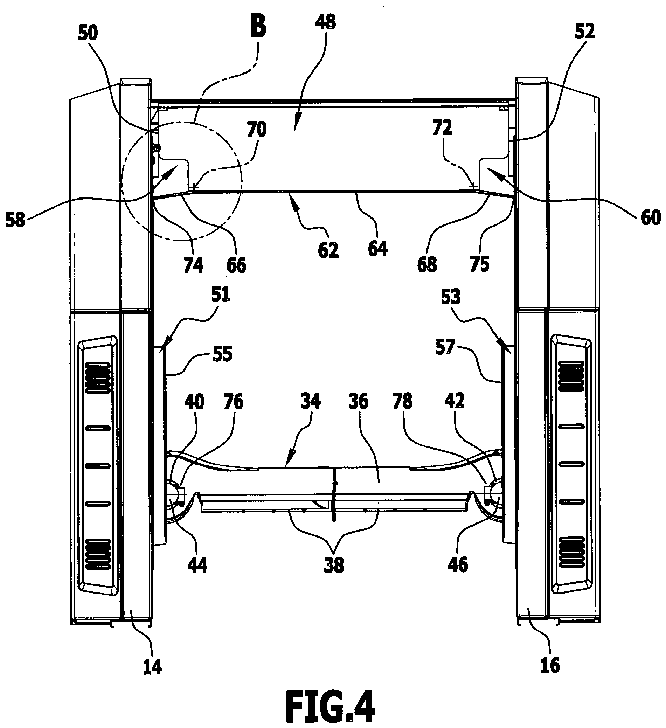

Die Reinigung des Fahrzeugs erfolgt mit Hilfe einer Reinigungsflüssigkeit, vorzugsweise mit Hilfe von Wasser, die mittels an sich bekannter Spritzdüsen auf das Fahrzeug aufgebracht wird. Nach erfolgtem Reinigungsvorgang wird das Fahrzeug getrocknet. Hierzu weist die Fahrzeugwaschanlage 10 ein Dachtrocknungsaggregat 34 auf mit einem Gehäuse 36, das sich zwischen den beiden Stützen 14, 16 erstreckt und das eine Dachtrocknungsdüse 38 aufweist, über die Blasluft aus dem Gehäuse 36 herausgeblasen werden kann. Zur Erzeugung der Blasluft weist das Dachtrocknungsaggregat 34 ein erstes Gebläse 40 und ein zweites Gebläse 42 auf, die jeweils einer Stütze 14 bzw. 16 unmittelbar benachbart angeordnet sind. Dies wird insbesondere aus Figur 4 deutlich. Das erste Gebläse 40 weist einen ersten Gebläsemotor 44 auf, der eine erste Turbine antreibt, und das zweite Gebläse42 weist einen zweiten Gebläsemotor 46 auf, der eine zweite Turbine antreibt. Mittels der beiden Turbinen kann in bekannter Weise ein Blasluftstrom erzeugt werden, der über die Trocknungsdüse 38 auf das zu trocknende Fahrzeug gerichtet werden kann.

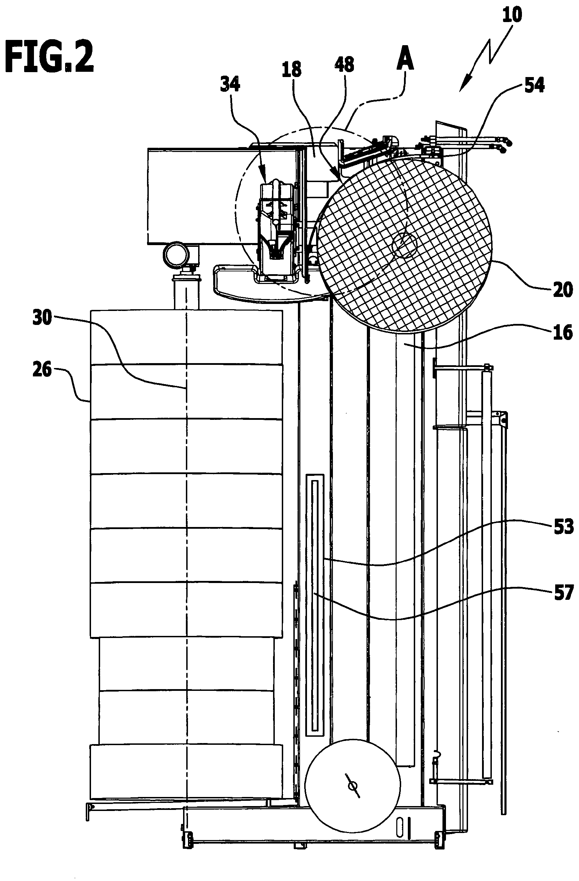

Das Dachtrocknungsaggregat 34 ist getrennt von der Dachwaschbürste 20 an den beiden Stützen 14, 16 gehalten und kann zwischen einer oberen Endstellung, die in Figur 2 dargestellt ist, und einer unteren Endstellung, die in Figur 4 dargestellt ist, hin und her bewegt werden.

Zur Trocknung eines Fahrzeuges weist die Fahrzeugwaschanlage 10 außerdem zwei Seitentrocknungsaggregate 51, 53 auf, die jeweils an einer Stütze 14 bzw. 16 angeordnet sind und jeweils eine Seitentrocknungsdüse 55, 57 aufweisen, mit denen eine Luftstrom auf die Seiten des Fahrzeugs gerichtet werden kann.

In Höhe der Traverse 18 ist zwischen der Dachwaschbürste 20 und dem Dachtrocknungsaggregat 34 ein Spritzschutzelement 48 angeordnet, das ungefähr die Form eines Viertelzylinders aufweist und die Dachwaschbürste 20 in ihrer oberen Endstellung in Umfangsrichtung über einen Winkelbereich von etwa 90° umgibt.

Das Spritzschutzelement 48 ist flächig ausgebildet und kann beispielsweise aus einem Blech oder aus einem Kunststoffmaterial geformt sein. Es weist einen der ersten Stütze 14 zugewandten ersten Seitenrand 50 und einen der zweiten Stütze 16 zugewandten zweiten Seitenrand 52 auf. Zwischen den beiden Seitenrändern 50, 52 erstreckt sich oberhalb der Dachwaschbürste 20 ein oberer Rand 54 des Spritzschutzelements 48 und dem oberen Rand 54 abgewandt weist das Spritzschutzelement 48 einen unteren Rand 56 auf. Der obere Rand 54 ist ebenso wie der untere Rand 56 horizontal ausgerichtet und die beiden Seitenränder 50, 52 sind kreisbogenförmig gekrümmt und verlaufen jeweils in einer Vertikalebene.

Die beiden Gebläsemotoren 44, 46 erstrecken sich ausgehend vom Gehäuse 36 des Dachtrocknungsaggregates 34 in Richtung auf die Dachwaschbürste 20. Damit die Gebläsemotoren 44, 46 vom Spritzschutzelement 48 nicht beeinträchtigt werden, wenn das Dachtrocknungsaggregat 34 seine obere Endstellung einnimmt, weist das Spritzschutzelement 48 im Bereich zwischen dem ersten Seitenrand 50 und dem unteren Rand 56 eine erste Aussparung 58 auf, und im Bereich zwischen dem zweiten Seitenrand 52 und dem unteren Rand 56 weist das Spritzschutzelement 48 eine zweite Aussparung 60 auf. Dies wird insbesondere aus Figur 4 deutlich. Wird das Dachtrocknungsaggregat 34 in seine obere Endstellung bewegt, so taucht der erste Gebläsemotor 44 in die erste Aussparung 58 ein und der zweite Gebläsemotor 46 taucht in die zweite Aussparung 60 ein. Dies erlaubt es, das Dachtrocknungsaggregat 34 in geringem Abstand zum Spritzschutzelement 48 anzuordnen, so dass die Fahrzeugwaschanlage 10 eine sehr kompakte Ausgestaltung aufweist. Die Gebläsemotoren 44, 46 bilden somit Teile des Dachtrocknungsaggregates 34, die in der oberen Endstellung des Dachtrocknungsaggregates 34 von einer Aussparung 58 bzw. 60 des Spritzschutzelements 48 aufgenommen werden. Alternativ oder ergänzend könnten auch andere Teile des Spritzschutzelements 48 von den Aussparungen 58, 60 aufgenommen werden.

Um zu vermeiden, dass während eines Trocknungsvorgangs Flüssigkeit vom Spritzschutzelement 48 abtropfen kann, ist am unteren Rand 56 des Spritzschutzelements eine Tropfenauffangvorrichtung angeordnet in Form einer Ablaufrinne 62, die sich über die gesamte Breite des Spritzschutzelements 48 erstreckt. Die Ablaufrinne 62 weist einen Hauptabschnitt 64 auf, der sich von der ersten Aussparung 58 bis zur zweiten Aussparung 60 erstreckt. Im Bereich der ersten Aussparung 58 schließt sich an den Hauptabschnitt 64 ein erster bewegbarer Endabschnitt 66 der Ablaufrinne 62 an, und im Bereich der zweiten Aussparung 60 schließt sich an den Hauptabschnitt 64 ein zweiter bewegbarer Endabschnitt 68 an.

Die beiden bewegbaren Endabschnitte 66, 68 sind jeweils um eine horizontal und senkrecht zum unteren Rand 56 ausgerichtete Schwenkachse 70 bzw. 72 schwenkbar am Hauptabschnitt 64 gehalten und können zwischen einer ersten und einer zweiten Stellung hin und her bewegt werden.

Der Querschnitt der Ablaufrinne 62 ist sowohl im Bereich des Hauptabschnitts 64 als auch im Bereich der bewegbaren Endabschnitte 66, 68 im Wesentlichen U-förmig ausgestaltet.

In Figur 4 nehmen die beiden bewegbaren Endabschnitte 66, 68 jeweils ihre erste Stellung ein. Der erste bewegbare Endabschnitte 66 erstreckt sich in der ersten Stellung über die gesamte Breite der ersten Aussparung 58 und untergreift die erste Aussparung 58, wobei er mit seinem der ersten Stütze 14 zugewandten freien Ende 74 über den ersten Seitenrand 50 in Richtung auf die erste Stütze 14 hervorsteht. In der ersten Stellung ist der erste Endabschnitt 66 in einem Winkel von etwa 5° zur Horizontalen geneigt, wobei er mit seinem freien Ende 74 eine tiefere Stellung einnimmt als mit seinem der ersten Stütze 14 abgewandten Ende, das sich an den Hauptabschnitt 64 der Ablaufrinne 62 anschließt. Mit seinem freien Ende 74 ragt der erste bewegbare Endabschnitt in Richtung auf die erste Stütze 14 über die Seitentrocknungsdüse 55 des ersten Seitentrocknungsaggregates 51 hinaus.

In entsprechender Weise erstreckt sich der zweite bewegbare Endabschnitt 68 in seiner ersten Stellung über die gesamte Breite der zweiten Aussparung 60 und untergreift die zweite Aussparung 60. Mit seinem der zweiten Stütze 16 zugewandten freien Ende 75 steht der zweite bewegbare Endabschnitt 68 seitlich über den zweiten Seitenrand 52 in Richtung auf die zweite Stütze 16 hervor. Auch der zweite Endabschnitt 68 ist in der ersten Stellung in einem Winkel von etwa 5° zur Horizontalen geneigt, wobei er mit seinem freien Ende 75 eine tiefere Stellung einnimmt als mit seinem der zweiten Stütze 16 abgewandten Ende, das sich an den Hauptabschnitt 64 der Ablaufrinne 62 anschließt. Mit seinem freien Ende 75 ragt der zweite bewegbare Endabschnitt 68 in Richtung auf die zweite Stütze 16 über die Seitentrocknungsdüse 57 des zweiten Seitentrocknungsaggregates 53 hinaus.

Die beiden bewegbaren Endabschnitte 66, 68 stellen in ihrer ersten Stellung sicher, dass Flüssigkeit, die im Bereich der ersten Aussparung 58 und im Bereich der zweiten Aussparung 60 vom Spritzschutzelement 48 abtropft, nicht auf ein unterhalb des Spritzschutzelements 48 angeordnetes Fahrzeug gelangen kann, vielmehr wird die Flüssigkeit von den Endabschnitten 66, 68 aufgefangen und aufgrund ihrer Neigung zur Horizontalen unter Wirkung der Schwerkraft in Richtung auf die erste Stütze 14 bzw. auf die zweite Stütze 16 abgeleitet. Ihre erste Stellung nehmen die bewegbaren Endabschnitte 66, 68 während eines Trocknungsvorgangs ein.

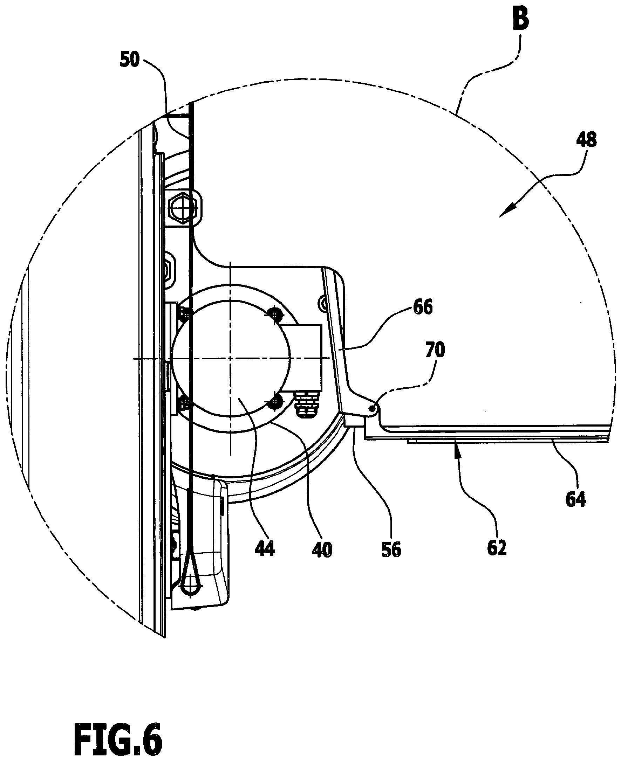

In ihrer zweiten Stellung sind der erste Endabschnitt 66 und der zweite Endabschnitt 68 geringfügig zur Vertikalen geneigt und geben die erste Aussparung 58 und die zweite Aussparung 60 frei. Dies wird aus Figur 6 am Beispiel des ersten bewegbaren Endabschnitts 66 deutlich. Ihre zweite Stellung nehmen die bewegbaren Endabschnitte 66, 68 nach Abschluss eines Trocknungsvorgangs ein.

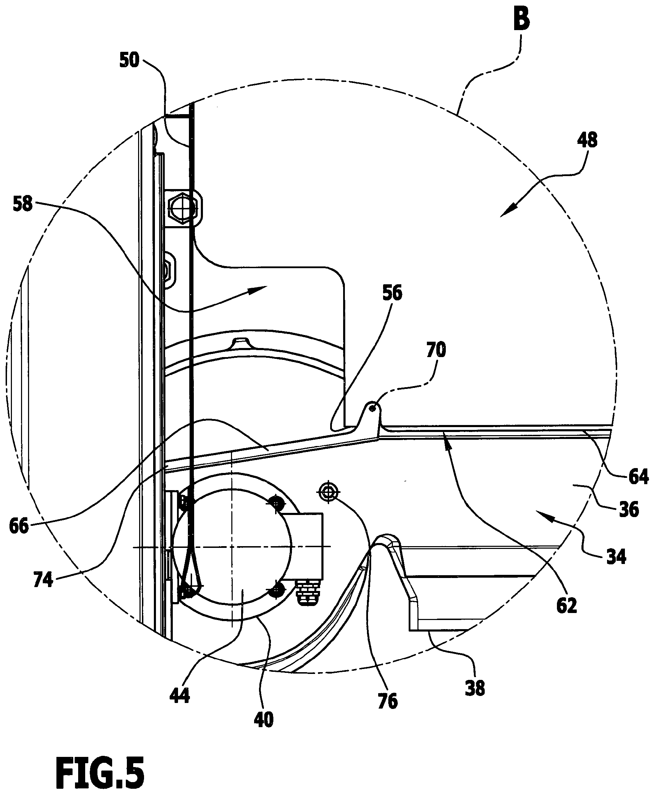

Die Bewegung des ersten bewegbaren Endabschnitts 66 aus seiner ersten Stellung in seine zweite Stellung erfolgt mit Hilfe eines ersten Mitnehmers 76, der dem ersten Gebläsemotor 44 unmittelbar benachbart am Gehäuse 36 des Dachtrocknungsaggregates 34 festgelegt ist. Wird das Dachtrocknungsaggregat 34 in seine obere Endstellung bewegt, so erreicht der erste Mitnehmer 76 die Unterseite des ersten bewegbaren Endabschnitts 66 und hebt den ersten bewegbaren Endabschnitt 66 an, wenn der erste Gebläsemotor 44 in die erste Aussparung 58 eintaucht. Dies wird aus den Figuren 5 und 6 deutlich. Wird das Dachtrocknungsaggregat 34 zu einem späteren Zeitpunkt wieder abgesenkt, so gibt der erste Mitnehmer 76 den ersten bewegbaren Endabschnitt 66 frei, der unter der Wirkung der Schwerkraft selbsttätig in seine erste Stellung übergeht.

Die Bewegung des zweiten bewegbaren Endabschnitts 68 aus seiner ersten Stellung in seine zweite Stellung erfolgt in entsprechender Weise wie die Bewegung des ersten bewegbaren Endabschnitts 66. Zum Anheben des zweiten bewegbaren Endabschnitts 68 ist am Gehäuse 36 des Dachtrocknungsaggregats 34 dem zweiten Gebläsemotor 46 unmittelbar benachbart ein zweiter Mitnehmer 78 angeordnet. Beim Eintauchen des zweiten Gebläsemotors 46 in die zweite Aussparung 60 hebt der zweite Mitnehmer 78 den zweiten bewegbaren Endabschnitt 68 an und beim Absenken des Dachtrocknungsaggregats 34 gibt der zweite Mitnehmer 78 den zweiten bewegbaren Endabschnitt 68 frei, so dass dieser unter der Wirkung der Schwerkraft selbsttätig aus seiner zweiten Stellung in seine erste Stellung übergeht.

Die Bewegung der beiden Endabschnitte 66, 68 erfolgt somit in Abhängigkeit von der Bewegung des Dachtrocknungsaggregates 34.

Mittels der beiden Endabschnitte 66, 68 und des Hauptabschnitts 64 ist sichergestellt, dass vom Spritzschutzelement 48 keine Flüssigkeit abtropfen kann, wenn das Dachtrocknungsaggregat 34 ausgehend von seiner oberen Endstellung abgesenkt wird. Das mittels des Dachtrocknungsaggregats 34 erzielbare Trocknungsergebnis wird somit nicht durch Flüssigkeitstropfen beeinträchtigt, die vom Spritzschutzelement 48 abtropfen. Außerdem stellen die bewegbaren Endabschnitte 66, 68 sicher, dass vom Spritzschutzelement 48 abtropfende Flüssigkeit nicht in die von den Seitentrocknungsaggregaten 51, 53 erzeugten Luftströme gelangen und auf die Seiten des Fahrzeuges gespült werden kann. Die Fahrzeugwaschanlage 10 zeichnet sich somit insgesamt durch ein sehr gutes Reinigungsergebnis aus, wobei sie eine sehr kompakte Bauform aufweist.

## Patentansprüche

1. Fahrzeugwaschanlage mit einer ersten und einer zweiten Stütze (14, 16), an denen eine um eine horizontale Drehachse (22) drehbare Dachwaschbürste (20) und ein Dachtrocknungsaggregat (34) jeweils zwischen einer oberen und einer unteren Endstellung hin und her bewegbar gehalten sind, und mit einem Spritzschutzelement (48), das in Höhe der oberen Endstellungen der Dachwaschbürste (20) und des Dachtrocknungsaggregates (34) zwischen der Dachwaschbürste (20) und dem Dachtrocknungsaggregat (34) angeordnet ist, **dadurch gekennzeichnet, dass** das Spritzschutzelement (48) mindestens eine Aussparung (58, 60) aufweist, die sich im Bereich zwischen einem Seitenrand (50, 52) und einem unteren Rand (56) des Spritzschutzelements (48) erstreckt und in die ein Teil des Dachtrocknungsaggregates (34) eintaucht, wenn das Dachtrocknungsaggregat (34) seine obere Endstellung einnimmt, wobei am unteren Rand (56) des Spritzschutzelements (48) eine sich über die gesamte Breite des Spritzschutzelements (48) erstreckende Ablaufrinne (62) angeordnet ist, die mindestens einen bewegbaren Endabschnitt (66, 68) aufweist, der zwischen einer ersten und einer zweiten Stellung hin und her bewegbar ist, wobei er sich in der ersten Stellung über die gesamte Breite einer Aussparung (58, 60) erstreckt und die Aussparung (58, 60) untergreift und in der zweiten Stellung die Aussparung (58, 60) freigibt.

2. Fahrzeugwaschanlage nach Anspruch 1, **dadurch gekennzeichnet, dass** der in der oberen Endstellung des Dachtrocknungsaggregates (34) in eine Aussparung (58, 60) des Spritzschutzelements (48) eintauchende Teil einen Gebläsemotor (44, 46) des Dachtrocknungsaggregates (34) ausbildet.

3. Fahrzeugwaschanlage nach Anspruch 1 oder 2, **dadurch gekennzeichnet, dass** das Spritzschutzelement (48) zwei Aussparungen (58, 60) aufweist, die sich jeweils im Bereich zwischen einem Seitenrand (50, 52) und dem unteren Rand (56) des Spritzschutzelements (48) erstrecken und in die jeweils ein Teil des Dachtrocknungsaggregates (34) eintaucht, wenn das Dachtrocknungsaggregat (34) seine obere Endstellung einnimmt, wobei die Ablaufrinne (62) zwei bewegbare Endabschnitte (66, 68) aufweist, die zwischen einer ersten und einer zweiten Stellung hin und her bewegbar sind und sich in der ersten Stellung jeweils über die gesamte Breite einer Aussparung (58, 60) erstrecken und die Aussparung (58, 60) untergreifen und in der zweiten Stellung die Aussparung (58, 60) freigeben.

4. Fahrzeugwaschanlage nach Anspruch 1, 2 oder 3, **dadurch gekennzeichnet, dass** die Ablaufrinne (62) einen ortsfest am unteren Rand (56) des Spritzschutzelements (48) gehaltenen Hauptabschnitt (64) aufweist, an dem der mindestens eine bewegbare Endabschnitt (66, 68) schwenkbar gelagert ist.

5. Fahrzeugwaschanlage nach einem der voranstehenden Ansprüche, **dadurch gekennzeichnet, dass** der mindestens eine bewegbare Endabschnitt (66, 68) in seiner ersten Stellung schräg zur Horizontalen geneigt ist, wobei er mit seinem einer Stütze (14, 16) zugewandten Ende (74, 75) eine tiefere Position einnimmt als mit seinem der Stütze (14, 16) abgewandten Ende.

6. Fahrzeugwaschanlage nach Anspruch 5, **dadurch gekennzeichnet, dass** die Fahrzeugwaschanlage (10) mindestens ein an einer Stütze (14, 16) angeordnetes Seitentrocknungsaggregat (51, 53) mit einer oder mehreren Seitentrocknungsdüsen (55, 57) aufweist, wobei der mindestens eine bewegbare Endabschnitt (66, 68) in seiner ersten Stellung in Richtung auf die Stütze (14, 16) über die mindestens eine Seitentrocknungsdüsedüse (55, 57) hervorsteht.

7. Fahrzeugwaschanlage nach einem der voranstehenden Ansprüche, **dadurch gekennzeichnet, dass** der mindestens eine bewegbare Endabschnitt (66, 68) in Abhängigkeit von der Bewegung des Dachtrocknungsaggregates (34) zwischen seiner ersten und seiner zweiten Stellung hin und her bewegbar ist.

8. Fahrzeugwaschanlage nach einem der voranstehenden Ansprüche, **dadurch gekennzeichnet, dass** der mindestens eine bewegbare Endabschnitt (66, 68) vom Dachtrocknungsaggregat (34) aus seiner ersten Stellung in seine zweite Stellung bewegbar ist.

9. Fahrzeugwaschanlage nach Anspruch 8, **dadurch gekennzeichnet, dass** der mindestens eine bewegbare Endabschnitt (66, 68) vom Dachtrocknungsaggregat (34) in seine zweite Stellung anhebbar ist.

10. Fahrzeugwaschanlage nach einem der voranstehenden Ansprüche, **dadurch gekennzeichnet, dass** der mindestens eine bewegbare Endabschnitt (66, 68) beim Absenken des Dachtrocknungsaggregates (34) aus dessen oberer Endstellung selbsttätig in seine erste Stellung bewegbar ist.

## Claims

1. Vehicle washing installation comprising a first and a second support (14, 16) on which a roof wash brush (20) rotatable about a horizontal axis of rotation (22) and a roof drying unit (34) are each held for movement back and forth between an upper and a lower end position and comprising a splash guard element (48) which is arranged between the roof wash brush (20) and the roof drying unit (34) at a level of the upper end positions of the roof wash brush (20) and the roof drying unit (34), **characterized in that** the splash guard element (48) has at least one recess (58, 60) which extends in the area between a lateral edge (50, 52) and a lower edge (56) of the splash guard element (48) and into which a part of the roof drying unit (34) extends when the roof drying unit (34) assumes its upper end position, wherein the lower edge (56) of the splash guard element (48) has arranged thereon a drain channel (62) extending over the entire width of the splash guard element (48), said drain channel (62) having at least one movable end section (66, 68) which is movable back and forth between a first and a second position, wherein said at least one movable end section (66, 68), when in its first position, extends over the entire width of a recess (58, 60) and engages under the recess (58, 60) and, when in its second position, releases the recess (58, 60).

2. Vehicle washing installation in accordance with claim 1, **characterized in that** the part of the roof drying unit (34) extending into a recess (58, 60) of the splash guard element (48) when the roof drying unit (34) is in its upper end position forms a blower motor (44, 46) of the roof drying unit (34).

3. Vehicle washing installation in accordance with claim 1 or 2, **characterized in that** the splash guard element (48) has two recesses (58, 60), each extending in the area between a lateral edge (50, 52) and the lower edge (56) of the splash guard element (48) and into each of which a part of the roof drying unit (34) extends when the roof drying unit (34) assumes its upper end position, wherein the drain channel (62) has two movable end sections (66, 68) which are movable back and forth between a first and a second position and which in their first position in each case extend over the entire width of a recess (58, 60) and engage under the recess (58, 60) and in the second position thereof release the recess (58, 60).

4. Vehicle washing installation in accordance with claim 1, 2 or 3, **characterized in that** the drain channel (62) comprises a main section (64) held stationary on the lower edge (56) of the splash guard element (48), said main section (64) having pivotally supported thereon the at least one movable end section (66, 68).

5. Vehicle washing installation in accordance with any one of the preceding claims, **characterized in that** the at least one movable end section (66, 68), when in its first position, is at an oblique angle to the horizontal, wherein the end (74, 75) thereof facing towards a support (14, 16) assumes a position lower than that of the end thereof facing away from the support (14, 16).

6. Vehicle washing installation in accordance with claim 5, **characterized in that** the vehicle washing installation (10) comprises at least one side drying unit (51, 53) arranged on a support (14, 16) and having one or more side drying nozzles (55, 57), wherein the at least one movable end section in its first position projects in a direction towards the support (14, 16) over the at least one side drying nozzle (55, 57).

7. Vehicle washing installation in accordance with any one of the preceding claims, **characterized in that** the at least one movable end section (66, 68) is movable back and forth between its first position and its second position depending on the movement of the roof drying unit (34).

8. Vehicle washing installation in accordance with any one of the preceding claims, **characterized in that** the at least one movable end section (66, 68) is movable back and forth from its first position to its second position by the roof drying unit (34).

9. Vehicle washing installation in accordance with claim 8, **characterized in that** the at least one movable end section (66, 68) is raisable to its second position by the roof drying unit (34).

10. Vehicle washing installation in accordance with any one of the preceding claims, **characterized in that** the at least one movable end section (66, 68) is automatically movable to its first position when lowering the roof drying unit (34) from the upper end position thereof.

## Revendications

1. Système de lavage de véhicules comprenant un premier et un deuxième support (14, 16) au niveau desquels une brosse de lavage de toit (20) pouvant tourner autour d'un axe de rotation horizontal (22) et une unité de séchage de toit (34) sont maintenues de façon à effectuer un mouvement de va-et-vient entre une position d'extrémité supérieure et une position d'extrémité inférieure, et un élément anti-projections (48) qui est disposé entre la brosse de lavage de toit (20) et l'unité de séchage de toit (34) à hauteur des positions d'extrémité supérieures de la brosse de lavage de toit (20) et de l'unité de séchage de toit (34), **caractérisé en ce que** l'élément anti-projections (48) comporte au moins un évidement (58, 60) qui s'étend dans la zone située entre un bord latéral (50, 52) et un bord inférieur (56) de l'élément anti-projections (48) et dans lequel une partie de l'unité de séchage de toit (34) s'enfonce lorsque l'unité de séchage de toit (34) occupe sa position d'extrémité supérieure, une rigole d'écoulement (62), qui s'étend sur toute la largeur de l'élément anti-projections (48) et qui possède au moins une section d'extrémité mobile (66, 68) qui est apte à effectuer un mouvement de va-et-vient entre une première et une deuxième position, étant ménagée au niveau du bord inférieur (56) de l'élément anti-projections (48), ladite section d'extrémité mobile, dans la première position, s'étendant sur toute la largeur de l'évidement (58, 60) et venant se plaquer sous l'évidement (58, 60) et, dans la deuxième position, libérant l'évidement (58, 60).

2. Système de lavage de véhicules selon la revendication 1, **caractérisé en ce que** la partie s'enfonçant dans un évidement (58, 60) de l'élément anti-projections (48), dans la position supérieure de l'unité de séchage de toit (34), constitue un moteur de ventilateur (44, 46) de l'unité de séchage de toit (34).

3. Système de lavage de véhicules selon la revendication 1 ou 2, **caractérisé en ce que** l'élément anti-projections (48) comprend deux évidements (58, 60), qui s'étendent chacun dans la zone située entre un bord latéral (50, 52) et le bord inférieur (56) de l'élément anti-projections (48) et dans chacun desquels s'enfonce une partie de l'unité de séchage de toit (34), lorsque l' unité de séchage de toit (34) occupe sa position supérieure, la rigole d'écoulement (62) comprenant deux sections d'extrémité mobiles (66, 68) qui effectuent un mouvement de va-et-vient entre une première et une deuxième position et qui s'étendent dans la première position respectivement sur toute la largeur d'un évidement (58, 60) et qui viennent se plaquer sous l'évidement (58, 60) et qui, dans la deuxième position, libèrent l'évidement (58, 60).

4. Système de lavage de véhicules selon la revendication 1, 2 ou 3, **caractérisé en ce que** la rigole d'écoulement (62) comprend une section principale (64) qui est maintenue fixe au niveau du bord inférieur (56) de l'élément anti-projections (48) et au niveau de laquelle la ou les sections d'extrémité mobiles (66, 68) sont montées pivotantes.

5. Système de lavage de véhicules selon l'une quelconque des revendications précédentes, **caractérisé en ce que** la ou les sections d'extrémité mobiles (66, 68) sont inclinées dans leur première position de manière oblique par rapport à l'horizontale, la ou les sections d'extrémité présentant par son ou leur extrémité (74, 75) tournée vers un support (14, 16) une position plus basse que par son ou leur extrémité (14, 16) tournant le dos au support (14, 16).

6. Système de lavage de véhicules selon la revendication 5, **caractérisé en ce que** le système de lavage de véhicules (10) comprend au moins une unité de séchage latéral (51, 53) agencée sur un support (14, 16) et pourvue d'une ou de plusieurs buses de séchage latéral (55, 57), la ou les sections d'extrémité mobiles (66, 68), dans sa ou leur première position, faisant saillie de la ou des buses de séchage latéral (55, 57) en direction du support (14, 16).

7. Système de lavage de véhicules selon l'une quelconque des revendications précédentes, **caractérisé en ce que** la ou les sections d'extrémité mobiles (66, 68) peuvent effectuer un mouvement de va-et-vient entre sa ou leur première position et sa ou leur deuxième position en fonction du mouvement de l'unité de séchage de toit (34).

8. Système de lavage de véhicules selon l'une quelconque des revendications précédentes, **caractérisé en ce que** la ou les sections d'extrémité mobiles (66, 68) peuvent être déplacées de sa ou leur première position dans sa ou leur deuxième position par l'unité de séchage de toit (34).

9. Système de lavage de véhicules selon la revendication 8, **caractérisé en ce que** la ou les sections d'extrémité mobiles (66, 68) peut ou peuvent être soulevée (s) dans sa ou leur deuxième position par l'unité de séchage de toit (34).

10. Système de lavage de véhicules selon l'une quelconque des revendications précédentes, **caractérisé en ce que** la ou les sections d'extrémité mobiles (66, 68), lors de l'abaissement de l'unité de séchage de toit (34), peut ou peuvent être déplacée(s) automatiquement de sa ou leur position d'extrémité supérieure dans sa ou leur première position.
